# EUROPÄISCHE PATENTANMELDUNG

(11) **EP 3 644 162 A2**
(43) Veröffentlichungstag der Anmeldung: **29.04.2020**
(21) Anmeldenummer: 19203872.7
(22) Anmeldetag: 17.10.2019
(51) Int. Cl.: G06F 3/01, G06F 3/03, G06F 3/0346

(54) **VERFAHREN UND SYSTEM ZUR STEUERUNG VON GERÄTEN IN STERILER UMGEBUNG**

(30) Priorität: 18.10.2018 DE 102018125956
(71) Anmelder: Karl Storz SE & Co. KG, 78532 Tuttlingen (DE)
(72) Erfinder: Ahrens, Thorsten, 78532 Tuttlingen (DE); Fallert, Johannes, 78532 Tuttlingen (DE); Fan, Chunman, 78532 Tuttlingen (DE); Mathe, Hans-Georg, 78532 Tuttlingen (DE); Wagner, Sebastian, 78532 Tuttlingen (DE)
(74) Vertreter: Witte, Weller & Partner Patentanwälte mbB

(57) **Zusammenfassung**

Die Offenbarung betrifft ein Verfahren zur Steuerung von Geräten (50, 52, 54, 56) in steriler Umgebung, umfassend Definition eines virtuellen Eingabefeldes (14) auf einer realen Oberfläche (12), Erfassung einer Bedienereingabe an der Oberfläche (12) im virtuellen Eingabefeld (14), wobei die Eingabe eine Bewegung eines Bedieners in Bezug auf die Oberfläche (12) umfasst, und wobei die Erfassung mittelbar erfolgt, Darstellung einer visuellen Information (34) in Reaktion auf die Eingabe, und Ausführen einer der Eingabe zugeordneten Funktion. Die Offenbarung betrifft ferner ein zugehöriges Computerprogramm und ein System (10) zur Steuerung von Geräten (50, 52, 54, 56) in steriler Umgebung.

## Beschreibung

Die vorliegende Offenbarung bezieht sich auf ein Verfahren zur Steuerung von Geräten in steriler Umgebung, insbesondere mittels Gestensteuerung. Insbesondere bezieht sich die vorliegende Offenbarung auf ein Verfahren zur Steuerung medizinischer Geräte und/oder Vorrichtungen. Allgemein befasst sich die vorliegende Offenbarung mit der Bedienung von Geräten in Umgebungen mit erhöhten Anforderungen an die Reinheit.

Aus der US 6,771,294 B1 ist eine Verfahren zur Verwendung einer tragbaren mobilen Kommunikationsvorrichtung bekannt, umfassend: Erzeugen eines Bildes einer physischen Hand eines Benutzers und Erkennen einer natürlichen Unterteilung der physischen Hand des Benutzers; Erzeugen eines Augmented-Reality-Bildes durch Überlagern eines Bildes einer gewünschten Benutzeroberfläche mit dem Bild der physischen Hand des Benutzers; Auswählen eines gewünschten Segments durch Berühren einer geeigneten Partition auf der physischen Hand des Benutzers, wobei das Segment als natürliche Unterteilung der physischen Hand des Benutzers erkannt wird; und Ausführen einer Funktion, die sich auf das Segment in der Vorrichtung bezieht.

Das Bild zur Anzeige der Segmente wird virtuell erzeugt. Die Auswahlmöglichkeiten erscheinen nur im Augmented-Reality-Bild als Überlagerung der dortigen Abbildung der Hand.

Aus der DE 10 2013 110 847 B3 ist eine Steuervorrichtung zum Steuern eines Robotersystems mit wenigstens einem Roboterarm bekannt, wobei am Roboterarm ein chirurgisches Instrument befestigt ist, das einen Endeffektor aufweist, wobei die Steuervorrichtung ein Bilderfassungssystem umfasst, das die Steuervorgabe wenigstens einer Hand aufzeichnet, auswertet und in entsprechende Steuerbefehle für eine oder mehrere Komponenten des Robotersystems umsetzt.

Aus der DE 10 2011 078 967 A1 ist ein Mikroskopiesystem bekannt, mit einem Operationsmikroskop und einer Kamera zur Erfassung eines von dem Operationsmikroskop abgebildeten Objekts, einem das Operationsmikroskop sowie die Kamera tragenden Stativ, einer von der Kamera räumlich getrennten Bedieneinheit zur Steuerung von Gerätefunktionen der Kamera, wobei die Bedieneinheit einen Bildschirm zur Darstellung von aufrufbaren Gerätefunktionen und ein als Dreh-Drück-Bedienmittel ausgebildetes Auswahl- und Aufrufmittel zum Auswählen und Aufrufen einer der dargestellten Gerätefunktionen aufweist.

In der heutigen Zeit sind Operationssäle und andere medizinische Einrichtungen hochtechnisiert. Es gibt eine Vielzahl technischer Geräte und Systeme, beispielsweise Systeme zur Bilderfassung und Bilddarstellung, Systeme zur Bereitstellung von Medien (Gase, etc.), Geräte, die für den eigentlichen Behandlungsvorgang erforderlich sind, und Geräte, mit denen Umgebungsbedingungen beeinflusst werden können.

Ganz trivial kann es sich beispielsweise um Gerätschaften handeln, mit denen Einfluss auf die aktuelle Beleuchtung und/oder Einfluss auf eine aktuelle Positionierung des Patienten genommen werden kann.

Darüber hinaus können Systeme und Geräte zur Bilderfassung und Bilddarstellung Mikroskope, Endoskope und/oder sogenannte Exoskope umfassen. Darüber hinaus können beispielsweise Monitore und/oder tragbare Geräte (3D-Brillen, etc.) vorgesehen sein.

Die vorliegende Offenbarung bezieht sich nicht auf ein Verfahren, das therapeutische oder diagnostische Handlungen am menschlichen oder tierischen Körper beinhaltet.

Die Vielzahl an Gerätschaften, die häufig in steriler Umgebung gegeben ist, erlaubt eine Vielzahl von Einstellungen, Manipulationen und Interaktionen zwischen den beteiligten Personen sowie den technischen Einrichtungen. Dies bringt eine Reihe an Herausforderungen mit sich. Insbesondere muss bei Tätigkeiten in steriler Umgebung darauf geachtet werden, dass es zu keiner Kontamination und/oder sonstigen Verschmutzung kommt. Streng genommen müsste sodann eine erneute Reinigung und Sterilisation erfolgen.

Begriffe wie "Sterilisation" und "sterile Umgebung" sollen nicht einschränkend verstanden werden. Allgemein kann die vorliegende Offenbarung auch Verfahren zur Steuerung von Einrichtungen und Gerätschaften betreffen, die in einer Umgebung betrieben werden, in der besondere Anforderungen hinsichtlich etwaiger Verschmutzungen gelten.

Der Operateur bzw. das medizinische Personal müssen einerseits erforderliche Eingaben und Manipulationen der Geräte ausführen können. Dies darf jedoch nicht dazu führen, dass Verschmutzungen oder sonstige Kontaminationen entstehen. Dies gilt insbesondere für die Hände derjenigen Person, die in direktem oder indirektem Kontakt mit dem Patienten kommen. Schlimmstenfalls müsste der Sterilisationsvorgang erneut durchgeführt werden, wenn eine Kontamination durch eine Eingabe an einem Gerät möglich erscheint. Dies könnte auch dazu führen, dass nach der Eingabe am Gerät die (sterilen) Handschuhe gewechselt werden müssten. Dies erhöht den Aufwand für das medizinische Personal.

Eine Möglichkeit, Gerätschaften in steriler Umgebung zu bedienen, ist die Sprachsteuerung. Hier hat sich jedoch gezeigt, dass in der Praxis die hohen Erwartungen nicht oder nur zum Teil erfüllt werden können. Eine Sprachsteuerung hat häufig nur einen begrenzten Befehlsschatz. Insbesondere dann, wenn es hektisch wird, kann sich eine Sprachsteuerung als "Hemmschuh" oder "Flaschenhals" erweisen.

Eine weitere Möglichkeit, Geräte in steriler Umgebung zu bedienen, beinhaltet klassische Berührsteuerungen bzw. Kontaktsteuerungen. Dies kann einerseits ganz banal ein Betätigen taktiler Bedienelemente beinhalten. Taktile Bedienelemente können etwa Knöpfe, Drehregler, Schalter und dergleichen umfassen. Taktile Bedienelemente können jedoch auch Tastaturen, Mäuse und Ähnliches umfassen. Taktile Bedienelemente können jedoch auch Berührbildschirme (Touchscreens) oder Berührflächen ohne Anzeigefunktion (Touchpads) umfassen. Es versteht sich, dass eine Berührsteuerung aufgrund des zwingend erforderlichen Kontakts mit der berührsensitiven Fläche bzw. den zu kontaktieren Elementen mit einer Kontamination verbunden sein kann. Dies gilt beispielsweise dann, wenn ein Operateur, Chirurg oder sonstiges medizinisches Personal derartige Betätigungen mit sterilen Handschuhen vornimmt.

Eine weitere Möglichkeit, Touchscreens und ähnliche Berührflächen für Eingaben in sterilen Umgebungen zu ertüchtigen, besteht in der Verwendung steriler Überzüge. Dies führt jedoch zu einem Mehraufwand. Ferner ist die Bedienung weniger feinfühlig.

Eine weitere Möglichkeit für Eingaben in steriler Umgebung ist die Verwendung von Fußpedalen. Es hat sich jedoch gezeigt, dass damit nur wenige Aktionen steuerbar sind.

Daneben sind grundsätzlich sogenannte Datenhandschuhe bekannt, welche für Interaktionen mit Geräten nutzbar sind. Das Konzept des Datenhandschuhs kollidiert jedoch grundsätzlich mit den Haupttätigkeiten in sterilen Umgebungen, etwa in Operationssälen. Mit den Händen werden Eingriffe vorgenommen, chirurgische Instrumente und/oder Diagnoseinstrumente gehalten und gesteuert.

Ferner ist es grundsätzlich bekannt, Bewegungen und Gesten dreidimensional im Raum zu erfassen, üblicherweise durch Verwendung mehrerer Kameras. Dies kann unter Verwendung von Markern oder ohne Marker erfolgen. Jedoch weist auch dieser Ansatz diverse Nachteile auf. Insbesondere mangelt es an einer unmittelbaren Rückmeldung, die den Bediener Klarheit darüber verschafft, welche Aktion er gerade ausgelöst hat. Insgesamt besteht hier die nicht unerhebliche Gefahr, dass die Bedienung nicht hinreichend eindeutig ist. Die Gefahr von Fehlbedienungen steigt.

Vor diesem Hintergrund liegt der vorliegenden Offenbarung die Aufgabe zugrunde, ein Verfahren und ein System zur Steuerung von Geräten in steriler Umgebung oder allgemein von medizinischen Einrichtungen anzugeben, die die Nutzerergonomie verbessern und gleichwohl die Gefahr von Verunreinigungen/Kontaminationen verringern oder gar ausschließen können.

Vorzugsweise erlauben das Verfahren bzw. das System eine eindeutige Bedienung mit deutlicher Rückmeldung (Feedback), so dass es dem Bediener unmittelbar klar wird, welche Aktion er gerade ausgelöst hat.

Weiter bevorzugt tragen das Verfahren bzw. das System zu einer Erhöhung der Flexibilität der Bedienung bei. Dies betrifft beispielsweise die Anordnung und/oder die Größe eines Bedienfeldes.

Das Verfahren bzw. das System sind vorzugsweise für die Verwendung in sterilen Räumen geeignet, etwa in Operationssälen oder in sonstigen medizinischen Einrichtungen. Ferner ergibt sich vorzugsweise auch eine Eignung für Laboratorien und sonstige Einrichtungen mit erhöhten Anforderungen an die Reinheit.

Gemäß einem ersten Aspekt wird die Aufgabe der Erfindung durch ein Verfahren zur Steuerung von Geräten in steriler Umgebung, insbesondere mittels Gestensteuerung, gelöst, mit den folgenden Schritten,
- Definition eines virtuellen Eingabefeldes auf einer realen Oberfläche,
- Erfassung einer Bedienereingabe an der Oberfläche im virtuellen Eingabefeld, wobei die Eingabe eine Bewegung eines Bedieners in Bezug auf die Oberfläche umfasst, und wobei die Erfassung mittelbar erfolgt,
- Darstellung einer visuellen Information in Reaktion auf die Eingabe, und
- Ausführen einer der Eingabe zugeordneten Funktion.

Die Aufgabe der Erfindung wird auf diese Weise vollkommen gelöst.

Erfindungsgemäß erlaubt nämlich das Verfahren eine einfache und intuitive Bedienung, wobei gegebene Anforderungen an die Sterilität oder vergleichbare Anforderungen weiterhin erfüllt werden kann. Chirurgen und sonstiges medizinisches Personal können schnell und ohne hohen Zusatzaufwand erforderliche Eingaben zur Steuerung von verwendeten Gerätschaften vornehmen. Die Bedienung ist intuitiv und eindeutig. Bedienfehler lassen sich minimieren. Der physische Kontakt mit der Oberfläche im Eingabefeld erlaubt sozusagen schon eine taktile Bedienung, da der Bediener jedenfalls bei einer Berührung einen Widerstand spürt. Das Verfahren kann auch als Bedienverfahren bezeichnet werden.

Bei Geräten, die in steriler Umgebung betrieben werden, handelt es sich häufig um medizinische Einrichtungen und Gerätschaften. Beispielswiese kann es sich um dabei um fest verbaute und nicht fest verbaute Geräte in einem Operationssaal und/oder einem Untersuchungszimmer handeln. Allgemein kann es sich um Gerätschaften in einem Patientenzimmer handeln. Generell ist eine Anwendung des Verfahrens in Umgebungen vorstellbar, bei denen erhöhte Anforderungen an die Sterilität, Desinfektion, Kontaminationsfreiheit und/oder Sauberkeit im Allgemeinen gegeben sind. Es versteht sich, dass unter dem Begriff "sterile Umgebung" auch eine "nahezu sterile Umgebung" zu verstehen ist.

Es hat sich gezeigt, dass die Bedienung wesentlich genauer, eindeutiger und feinfühliger erfolgen kann, wenn eine gestenbasierte Steuerung nicht willkürlich frei im Raum sondern entlang einer Fläche, also entlang eines Eingabefeldes, vorgenommen wird. Bereits die Möglichkeit, die Eingabe entlang des Eingabefeldes vorzugnehmen ermöglich eine bessere und eindeutigere Eingabebewegung bzw. Eingabegeste. Durch das Eingabefeld (auf der realen Oberfläche) gibt es eine Referenz bzw. einen Widerstand für die Bediengeste/Bedienbewegung.

Im Rahmen der vorliegenden Offenbarung wird vorgeschlagen, die Bedienereingabe mittelbar zu erfassen. Dies kann regelmäßig unabhängig von der Oberfläche erfolgen, die gewissermaßen als "Hilfsmittel" oder "Basis" für die Bedienereingabe genutzt wird. Dies heißt mit anderen Worten, es werden keine Touchpads, Touchscreens o. ä. Elemente für die unmittelbare Erfassung von Bedieneingaben an Oberflächen verwendet.

Die Bedienereingabe umfasst regelmäßig eine Bewegung, etwa eine Geste, ein Antippen, ein Annähern, und dergleichen. Im Rahmen der vorliegenden Offenbarung umfasst eine Geste sowohl eine zweidimensionale oder dreidimensionale Bewegung als auch ein Antippen, also ein Berühren eines Punktes. Es ist ausdrücklich sowohl eine Berührung als auch eine Annäherung umfasst.

Die Oberfläche, welche als Bezugsfläche für die Eingabe dient, kann willkürlich gewählt werden. Ganz banal kann beispielsweise eine Handfläche als Eingabefeld, mithin als Basis für die Bedienung genutzt werden. Genauso gut kann jedoch eine nahezu beliebig wählbare Wand oder Fläche in der Umgebung zumindest als temporäre Eingabefläche festgelegt werden.

Die vorliegende Offenbarung bezieht sich in wesentlichen Ausführungsformen gerade nicht auf ein Verfahren zur therapeutischen oder chirurgischen Behandlung des menschlichen oder tierischen Körpers, und auch nicht auf ein Diagnoseverfahren. Stattdessen geht es primär um Konzepte zur Bedienung von Gerätschaften. Diese Gerätschaften können zum Teil im medizinischen/chirurgischen Umfeld benutzt werden.

Gemäß einer beispielhaften Ausgestaltung ist die Oberfläche sterilisierbar. Alternativ oder zusätzlich weist die Oberfläche einen sterilen Überzug auf. Bei der Oberfläche kann es sich etwa um eine Handfläche handeln. Grundsätzlich ist auch eine sonstige Fläche am Körper des Bedieners oder sogar einer weiteren Person vorstellbar. Üblicherweise tragen anwesende Personen in einem Operationssaal oder in sonstigen Räumen, in denen es auf die Sterilität ankommt, Handschuhe, Überzieher, und dergleichen. Dies steht der Definition als Eingabefeld nicht entgegen.

Es ist jedoch auch vorstellbar, eine nicht-sterile Oberfläche zu nutzen, wenn sichergestellt wird, dass kein direkter Kontakt oder keine direkte Übertragung erfolgt. Dies wäre also etwa dann vorstellbar, wenn ein entsprechend gestalteter Stylus verwendet wird, mit dem die Oberfläche kontaktiert wird.

Ferner ist eine derartige Umsetzung mit nicht-sterilen Oberflächen vorstellbar, wenn Lichtzeiger verwendet werden, etwa nach Art eines Laserpointers. Auf diese Weise ist es zunächst einmal unerheblich, ob die Oberfläche, auf der das Eingabefeld definiert wird, kontaminiert ist oder in sonstiger Weise belastet. Da der Kontakt mit der Oberfläche "optisch" erfolgt, besteht nicht die Gefahr, dass sich durch die Bedienung Keime oder sonstige Mikroorganismen übertragen.

In ähnlicher Weise gilt dies für Wände und sonstige Flächen von Gerätschaften und Elementen, die fest oder lösbar in der Arbeitsumgebung vorgesehen sind. Mit anderen Worten schlägt die vorliegende Offenbarung vor, eine nahezu beliebig wählbare Fläche zu nutzen, um darauf ein "virtuelles" Eingabefeld zu definieren.

Das virtuelle Eingabefeld kann statisch oder mobil (sich bewegend) sein. Dies kann sich einerseits auf die Position, andererseits auch auf die Ausrichtung und/oder Gestalt beziehen. Beispielsweise kann sich die Oberfläche. Die Beschaffenheit der Oberfläche kann sich ändern. Das Eingabefeld kann auch durch verschiedene Oberflächen definiert werden.

Der Schritt der Erfassung der Bedienereingabe kann eine Nachverfolgung (Tracking) der Eingabebewegung umfassen. Beispielsweise kann sodann mittels Mustererkennung eine konkrete Eingabe bzw. ein konkreter Befehl erkannt werden.

In beispielhaften Ausführungsformen des Verfahrens ist die Oberfläche willkürlich wählbar. Dies trifft zumindest in weiten Grenzen zu. Jedenfalls in weiten Grenzen ist eine beliebige Größe, Lage, Orientierung und Oberflächenbeschaffenheit derjenigen Oberfläche, die als Eingabefeld definiert wird, variabel. Das Eingabefeld kann auf metallischen Oberflächen und nicht metallischen Oberflächen definiert werden. Das Eingabefeld kann auch auf (menschlicher) Haut definiert werden, etwa in einer Handfläche. Dieser Gestaltungsvariante steht nicht entgegen, dass die Oberfläche beispielsweise mit einem sterilen Material umhüllt/bedeckt ist. Da die Erfassung der Bedienereingabe mittelbar erfolgt, ist es nicht unbedingt notwendig, die gewählte Oberfläche tatsächlich auch unmittelbar zu berühren.

In beispielhaften Ausführungsformen des Verfahrens sind zumindest zwei Arten von Bedieneingaben erfassbar, die aus der Gruppe ausgewählt sind, die aus Folgendem besteht: Gesten, Pfade, Koordinateneingaben, Antippen, Doppel-Tipp, Mehrfach-Tipp, und Eingabebestätigungen.

Es hat sich gezeigt, dass Gesten, welche ein Antippen und ähnliche Impulse umfassen, im dreidimensionalen Raum häufig nur schlecht darstellbar und erfassbar sind. Dies gilt insbesondere im Hinblick auf einen eigentlich gewünschten "Widerstand" den der Bediener spürt, wenn er eine Fläche antippt, also auf die Fläche "klopft".

In beispielhaften Ausführungsformen wird das virtuelle Eingabefeld auf der realen Oberfläche optisch wahrnehmbar hervorgehoben. Beispielsweise kann eine Projektionseinheit genutzt werden, um das virtuelle Eingabefeld auf der realen Oberfläche hervorzuheben. Dies kann in beispielhaften Ausgestaltungen eine Darstellung eines Umrisses oder einer Fläche umfassen. Somit entsteht das Eingabefeld direkt auf der realen Oberfläche. Demgemäß ist das virtuelle Eingabefeld gemäß dieser Ausführungsform auf der realen Oberfläche sichtbar, beispielsweise ohne separate Hilfsmittel. Gemäß dieser Ausführungsform ist das virtuelle Eingabefeld nicht nur als Augmented-Reality Bild einer Abbildung der realen Oberfläche überlagert, etwa auf einem Bildschirm oder einem Head-Mounted Display. Stattdessen wird das virtuelle Eingabefeld auf der realen Oberfläche erzeugt, und nicht nur auf einer Abbildung davon. Es ist gleichwohl vorstellbar, in beispielhaften Ausführungsformen, Hilfsmittel zur Betonung des virtuellen Eingabefelds bei der optischen Wahrnehmung zu nutzen, etwa Polarisationsbrillen, Brillen mit optischem Filter, oder dergleichen.

Gemäß einer beispielhaften Ausführungsform des Verfahrens umfasst die Eingabe auf der Oberfläche eine Eingabegeste, wobei die visuelle Darstellung an die Eingabegeste angepasst ist und insbesondere einen Eingabepfad wiedergibt.

Mit anderen Worten kann die visuelle Darstellung (visuelles Feedback) ähnlich frei wie die Geste gewählt werden. Die Art der Geste kann die Art der visuellen Rückmeldung vorgeben. Es ist vorstellbar, eine Kurve oder einen Pfad als visuelle Rückmeldung in Reaktion auf eine Eingabegeste auszugeben. Es ist jedoch auch vorstellbar, etwa ein Tipp-Muster visuell darzustellen, etwa durch ein Pulsieren oder ähnliche Punktsignale, die nicht nur binäre Zustände (An/Aus), sondern auch Zwischenzustände aufweisen können (etwa ein Flackern, Pulsieren oder eine sonstige Signalfolge). Dies kann zum Beispiel Signal-Abstände (zeitlich und/oder räumlich) betreffen. Der Begriff räumlich bezieht sich beispielsweise darauf, dass sich die Anzeigegröße ändern kann, etwa periodisch oder in anderer Weise. In ähnlicher Weise kann sich jedoch auch die Position eine Darstellung periodisch oder nicht-periodisch ändern. Ferner kann dies eine Wahl und ggfs. Variation einer bestimmten Anzeigegeschwindigkeit umfassen (Pulsieren, Flackern, etc.).

Gemäß einer weiteren beispielhaften Ausführungsform des Verfahrens umfasst die visuelle Darstellung eine definierte Verzögerung, insbesondere einen definierten zeitlichen Nachlauf. Ein solcher Nachlauf könnte folglich den Pfad der Bedienereingabe/Bedienergeste nachzeichnen. Wenn dies mit einem gewissen zeitlichen Versatz bzw. mit zeitlichen Nachlauf erfolgt, so bekommt der Bediener eine deutliche Rückmeldung und kann etwa eine Fehleingabe erkennen und korrigieren.

Analog dazu kann etwa bei einer Eingabe durch Antippen grundsätzlich auch ein Pulsieren vorgesehen sein. Ferner kann ähnlich einem Mose-Code eine Signalfolge ausgegeben werden.

Generell gilt, dass die visuelle Darstellung (optisches Feedback) in dem Bereich erfolgen kann, in dem auch die Eingabe vorgenommen wurde. Es ist jedoch auch grundsätzlich vorstellbar, die visuelle Darstellung in einem anderen Bereich bereitzustellen. Dies kann beispielsweise in einer Ausführungsform dahin gehen, dass der Bediener eine Eingabe in Form einer Geste in seiner Handfläche vornimmt, wobei die visuelle Rückmeldung in einer Wandfläche oder Gerätefläche erfolgt.

Gemäß einer weiteren beispielhaften Ausführungsform des Verfahrens bildet die Oberfläche eine Referenz für die Bedienereingabe, wobei die Bewegung entlang der Oberfläche erfolgt. Auf diese Weise kann sich das gewünschte Feedback (durch mechanischen Widerstand ergeben). Die Genauigkeit der Erfassung der Bedienergesten kann sich erhöhen. Damit erhöht sich die Eindeutigkeit der Bedienereingaben. Es können diverse Bedienereingaben sicher in Bezug auf die Oberfläche vorgenommen und erfasst werden.

Gemäß einer weiteren beispielhaften Ausführungsform des Verfahrens wird eine Handfläche einer Hand als Oberfläche für das Eingabefeld genutzt wird, wobei die Bedienereingabe vorzugsweise mit einem Finger einer weiteren Hand erfolgt. Alternativ kann für die Eingabe ein Stift (Stylus) verwendet werden.

Die Nutzung der Handfläche als Eingabefläche hat den Vorteil, dass etwa ein einer sterilen oder nahezu sterilen Umgebung die Eingabe mit den beiden Händen ein und derselben Person erfolgen kann. Sofern an beiden Händen sterile Handschuhe getragen werden oder sonstige Maßnahmen (Desinfizierung) getroffen wurden, kann eine Bedienereingabe vorgenommen werden, ohne dass sich dies nachteilig auf den sterilen Zustand bzw. Desinfektionszustand auswirkt. Dies gilt sowohl dann, wenn die Eingabe mit einem Finger erfolgt, als auch dann, wenn die Eingabe mit einem Hilfsmittel (etwa einem Stylus) vorgenommen wird.

Gemäß einer weiteren beispielhaften Ausführungsform weist das Verfahren ferner folgende Schritte auf:
- Bereitstellung einer Erfassungseinheit zur berührungslosen Erfassung der Eingabe, und
- Erfassung der Eingabe mit der Erfassungseinheit.

Bei der Erfassungseinheit kann es sich grundsätzlich um eine optische Erfassungseinheit handeln, etwa in Form einer Kamera. Die Erfassung kann flächenmäßig (zweidimensional) oder räumlich (dreidimensional) erfolgen. Für die dreidimensionale Erfassung sind Ausführungsformen vorstellbar, welche mehr als nur eine Sensoreinheit bei der Erfassungseinheit vorsehen. Beispielsweise ist es vorstellbar, zwei oder mehr Kameras zu kombinieren, um eine dreidimensionale Erfassung zu ermöglichen.

Die Erfassungseinheit kann auch als Tracking-Einheit bezeichnet werden. Es versteht sich, dass mehrere Tracking-Elemente kombiniert werden können, um für eine gute räumliche Abdeckung zu sorgen. Dies erhöht die Flexibilität des Ansatzes und die Freiheit des Bedieners bei der Definition des Eingabefeldes.

Neben der optischen Erfassung sind auch andere Prinzipien vorstellbar, auf denen die Erfassungseinheit beruht. Dies kann beispielsweise elektromagnetische Sensoren, induktive Sensoren, kapazitive Sensoren, etc. umfassen. Ferner ist auch eine Kombination entsprechender Sensoren vorstellbar, um die Genauigkeit und Zuverlässigkeit der Erfassungseinheit zu erhöhen.

Gemäß einer weiteren beispielhaften Ausführungsform des Verfahrens wird zur Eingabe ein Marker verwendet, dessen Position ermittelbar ist. Hierbei kann es sich etwa um einen Berührmarker handeln, etwa in Form eines Stylus. Es ist auch vorstellbar, etwa am Finger oder an der Hand, mit dem/der die Eingaben getätigt werden, einen Marker vorzusehen, dessen Position für die Erfassungseinheit detektierbar und auswertbar ist. Die Detailgestaltung des Markers ist regelmäßig an die bei der Erfassungseinheit verwendeten Sensoren angepasst. Der Marker kann auch als Zeiger bezeichnet werden.

Es ist vorstellbar, gleichzeitig zwei oder mehr Marker zu verwenden, um mehr Freiheitsgrade bei der Eingabe zu haben, vergleichbar etwa Multi-Touch-Gesten. Die Marker können auch als Zeiger bezeichnet werden oder als Bestandteil von Zeigern gestaltet sein.

Es ist jedoch auch vorstellbar, auf einen Marker zur verzichten, wenn die Erfassungseinheit dazu ausgebildet ist, beispielsweise die Position und Orientierung eines Fingers (bzw. einer Fingerkuppe) zu erfassen und zu verfolgen. Anders gesagt bilden sodann die Finger bzw. deren Fingerkuppen Marker bzw. Zeiger.

Gemäß einer weiteren beispielhaften Ausführungsform des Verfahrens ist der Marker handhaltbar und/oder handführbar, und mit Positionsreferenzen versehen, deren Position durch die Erfassungseinheit ermittelbar ist. Demgemäß kann der Marker etwa als Stylus gestaltet sein. Ein Bediener kann den Marker bedarfsweise oder permanent in seiner Hand halten und entsprechend durch Armbewegung, Handbewegungen und/oder Fingerbewegungen steuern.

Gemäß einer beispielhaften Ausführungsform ist der Marker definiert in zumindest zwei Betriebsmodi betreibbar. Dies kann beispielsweise ein Ausführungsbeispiel umfassen, bei dem ein Marker in einem ersten Betriebsmodus insbesondere zur Erfassung zweidimensionaler oder dreidimensionaler Gesten ausgebildet ist. Mit anderen Worten geht es darum, einen Eingabepfad zu erfassen. In einem zweiten kann der Marker hingegen zur Erfassung von Klickbewegungen (einfaches Antippen, doppeltes Antippen, spezifische Tipp-Signalfolgen) ausgebildet sein. Dies umfasst also keinen Bewegungspfad entlang der Bedienfläche, sondern die gezielte einfache oder mehrfache Anwahl bestimmter Punkte (Koordinaten) in der Bedienfläche. Auf diese Weise können beispielsweise Werte oder vorher getroffene Eingaben bestätigt oder verworfen werden.

Gemäß einer weiteren beispielhaften Ausführungsform des Verfahrens wird zur Eingabe ein optischer Zeiger, insbesondere ein Lichtzeiger oder Laserpointer, verwendet, wobei die Position eines Zielpunktes des optischen Zeigers im Eingabefeld erfassbar ist. Demgemäß kann der Marker auch ein optischer Zeiger sein, wobei die erfasste/getrackte Markierung beispielsweise ein Lichtpunkt ist.

Die Eingabe mit einem optischen Zeiger ermöglicht eine Eingabe auch auf nicht sterilen Oberflächen. Der Desinfektionszustand der Fläche spielt keine Rolle, da keine "mechanische" Berührung erfolgt.

Gemäß einer weiteren beispielhaften Ausführungsform umfasst das Verfahren ferner eine Definition, insbesondere eine temporäre Definition, eines Eingabefeldes, vorzugsweise durch Auswahl zumindest zweier Punkte auf der Oberfläche, oder durch Auswahl eines Punktes und Festlegung einer Richtung. Das Erkennen der Anwesenheit eines Fingers/Stylus/Pointers (in bestimmter Ausrichtung) kann beispielsweise eine Richtung bzw. Orientierung des Eingabefeldes definieren. Das Erkennen eines Fingers kann beispielsweise eine Strecke (Abmessung des Eingabefeldes) definieren.

Auf diese Weise kann das Eingabefeld in einfacher Weise ausgewählt und optional skaliert werden. So ist vorstellbar, dass Eingabefeld durch Setzen zweier Punkte zu definieren, welche eine Diagonale eines Rechtecks oder Quadrats bestimmen. Natürlich sind auch Ausführungsformen vorstellbar, bei denen drei, vier oder mehr Punkte ausgewählt werden, um das Eingabefeld zu definieren. Ferner ist es auch vorstellbar, dass Eingabefeld durch Wahl eines einzigen Punktes (etwa Mittelpunkt oder Eckpunkt im Feld) zu definieren. Dies kann um Wahl/Festlegung einer Richtung ergänzt werden, so dass sich die Position und die Orientierung des Eingabefeldes einfach definieren lassen. Die Wahl des Eingabefeldes kann in einem entsprechenden Eingabefeldwahlmodus der Erfassungseinheit erfolgen.

Es ist auch vorstellbar, einen Referenzzeiger zu verwenden, der das Eingabefeld definiert. Hierbei kann es sich etwa um einen Zeiger/Marker handeln, der im System mit einer Richtungsinformation und gegebenenfalls auch mit einer Größeninformation betreffend das Eingabefeld verknüpft ist. Auf diese Weise kann schnell und flexibel durch Platzieren lediglich eines Markers das Eingabefeld eindeutig definiert werden. Ein solcher Referenzmarker oder Referenzzeiger kann ebenso von der Erfassungseinheit erfasst werden, wodurch das Eingabefeld sicher und genau definiert ist.

Gemäß einer weiteren beispielhaften Ausführungsform des Verfahrens erfolgt die Darstellung der visuellen Information in Reaktion auf die Eingabe mit einer Projektionseinheit, insbesondere einem Laserprojektor. Auf diese Weise kann die visuelle Information als optische Rückmeldung ebenso frei im Raum erfolgen wie die Eingabe. Wie vorstehend bereits ausgeführt, kann die visuelle Information zunächst eine Visualisierung der Eingabe bzw. der Bediengeste umfassen.

Gemäß einer weiteren beispielhaften Ausführungsform des Verfahrens erfolgt die Darstellung der visuellen Information in Reaktion auf die Eingabe im virtuellen Eingabefeld, oder hierzu benachbart, vorzugswiese durch eine Projektion auf die reale Oberfläche.

Mit anderen Worten kann derjenige Pfad/Bereich/Punkt, den der Bediener für seine Eingabe berührt bzw. gezeichnet hat, optisch hervorgehoben und wiedergegeben werden. Auf diese Weise ergibt sich eine sehr direkte und eindeutige Rückmeldung. Etwa dann, wenn die Rückmeldung mit einer gewissen Verzögerung erfolgt, nimmt der Bediener unmittelbar wahr, welche Eingabe er tatsächlich getätigt hat.

Es ist jedoch auch vorstellbar, die visuelle Information in einem entfernten Bereich darzustellen, der vom gewählten Bedienfeld deutlich beabstandet ist. Auf diese Weise kann sich eine eindeutige Rückmeldung ergeben, etwa dann, wenn der Bediener zunächst die Eingabe "blind" vornimmt und währenddessen auf der beanstandeten Anzeigefläche anhand der dort bereitgestellten optischen Rückmeldung seine Eingabe überprüfen kann.

Gemäß einer weiteren beispielhaften Ausführungsform des Verfahrens wird das virtuelle Eingabefeld optisch wahrnehmbar hervorgehoben, insbesondere durch eine Projektionseinheit. Auf diese Weise erhält der Bediener Hilfestellung dahingehend, welche Fläche (Lage, Orientierung, Größe) als Eingabefeld/Bedienfeld ausgewählt wurde.

Gemäß einer weiteren beispielhaften Ausführungsform des Verfahrens wird zur Visualisierung des virtuellen Eingabefeldes und/oder zur Darstellung einer visuellen Information in Reaktion auf die Eingabe ein Head-Up-Display oder Head-Mounted-Display verwendet. Auch auf diese Weise kann dem Bediener unmittelbar und intuitiv eine Rückmeldung gegeben werden. Die eigentliche Bediengeste/Bedienbewegung kann hier von unabhängig "blind" erfolgen.

Allgemein kann die visuelle Information (optisches Feedback) Informationen oder zumindest Teile der Informationen aus der Gruppe enthalten, die aus Folgendem besteht: Position, Startpunkt, Pfad, Abstand, Geschwindigkeit, Richtung, Orientierung und Endposition. Umgekehrt können diese Information auch genutzt werden, um verschiedene Befehle/Bedieneingaben vorzunehmen.

Gemäß einem weiteren Aspekt wird die Aufgabe der Erfindung durch ein System zur Steuerung von Geräten in steriler Umgebung, insbesondere mittels Gestensteuerung, gelöst, vorzugsweise gemäß dem Verfahren nach einem der hierin beschriebenen Ausführungsbeispiele, wobei das System Folgendes aufweist:
- eine Erfassungseinheit zu berührungslosen Erfassung einer Bedienereingabe,
- eine Projektionseinheit zur optisch wahrnehmbaren Hervorhebung eines virtuellen Eingabefeldes und/oder zur Darstellung einer visuellen Information in Reaktion auf die Bedienereingabe, und
- eine Steuereinrichtung, die dazu ausgebildet ist:
   - ein virtuelles Eingabefeld auf einer realen Oberfläche rechentechnisch zu definieren,
   - die Bedienereingabe an der Oberfläche im virtuellen Eingabefeld zu erfassen, wobei die Eingabe eine Bewegung eines Bedieners in Bezug auf die Oberfläche umfasst, und wobei die Erfassung mittelbar erfolgt,
   - eine visuelle Information in Reaktion auf die Eingabe dazustellen, und
   - eine der Eingabe zugeordneten Funktion auszuführen.

Auch auf diese Weise wird die Aufgabe der Erfindung vollkommen gelöst.

Gemäß einer beispielhaften Ausführungsform weist das System ferner ein Eingabegerät umfassend einen Marker und/oder einen Lichtzeiger auf, wobei die Erfassungseinheit zur Erfassung einer Position des Markers und/oder Lichtzeigers ausgestaltet ist.

Der Marker und/oder Lichtzeiger kann als Stylus oder als Bestandteil eines Stylus gestaltet sein. Es ist jedoch auch vorstellbar, die Eingaben direkt ohne entsprechenden (diskreten) Marker oder Lichtzeiger vorzunehmen, etwa mit dem Finger. In einem solchen Fall würde der Finger (bzw. die Hand, die Fingerkuppe, etc.) als "Marker" fungieren.

Gemäß einem weiteren Aspekt wird die Aufgabe der Erfindung durch Computerprogramm gelöst, das Programmcode aufweist, der ein System nach einer der hierin beschriebenen Ausführungsformen dazu veranlasst, das Verfahren nach einer der hierin beschriebenen Ausführungsformen ausführen, wenn das Computerprogramm durch die oder auf der Steuereinrichtung ausgeführt wird.

Das Computerprogramm kann auch als Gerätesteuerungsprogramm oder als Steuerungsprogramm bezeichnet werden. Bei der Steuereinrichtung kann etwa um einen Computer, ein computerähnliches Gerät und/oder ein Steuergerät handeln.

Es versteht sich, dass das System analog zum Verfahren weitergebildet sein kann, und umgekehrt. Mit anderen Worten kann das System gemäß denjenigen Merkmalen weitergebildet sein, denn die in den abhängigen Verfahrensansprüchen und/oder in das Verfahren betreffende Ausführungsbeispielen enthalten sind.

Allgemein bezieht sich die vorliegende Offenbarung zumindest in einigen Ausführungsbeispielen auf eine virtuelle Kommunikationsschnittstelle zwischen Mensch und Maschine, welche grundsätzlich keine fix definierten Eingabeflächen/Eingabebereiche und ferner grundsätzlich auch keine fix definierten Ausgabeflächen/Ausgabebereiche erfordert.

Diese Kommunikationsschnittstelle ist in hohem Maße unabhängig bzw. frei wählbar und konfigurierbar.

Die Kombinationsschnittstelle ist bewusst nicht dazu ausgebildet, eine Gestensteuerung durch Bewegungen im freien Raum ohne physischen Kontakt mit einem Eingabefeld/einer Bedienfläche zu ermöglichen. Stattdessen wird vorgeschlagen, eine entsprechende Fläche zu definieren, um den Bediener eine Referenz/Basis für seine Bewegungen zu geben. Der physische Kontakt macht die Berührungen, Bewegungen und insbesondere Gesten eindeutiger.

Eine Eingabebewegung an einer Oberfläche ermöglicht präzisere Bewegungen und eine bessere Kontrolle über die Bedieneingaben. Auf diese Weise kann eine hohe Genauigkeit und Empfindlichkeit ermöglicht werden. Da die Eingabe in Relation zu einer physischen Oberfläche erfolgt, ergibt sich eine bessere Wahrnehmung bzw. ein besseres Verständnis für Bestandteile der Bedienbewegung, wie etwa Startposition, Distanz, Geschwindigkeit, Richtung, Orientierung und Endposition. Dies unterscheidet sich von der herkömmlichen Gestensteuerung im freien Raum.

Die Oberfläche, an der das virtuelle Eingabefeld definiert wird, ist in weiten Grenzen frei wählbar. Hinsichtlich der Größe bzw. dem Format gibt es nur wenige Einschränkungen. Es kann sich grundsätzlich um eine sterile, ferner jedoch auch um eine unsterile Fläche handeln. Die Fläche kann flach (planar) oder gekrümmt sein. Die Fläche kann fest im Raum verankert oder als solches beweglich sein. Es kann sich bei der Fläche sogar um organisches Gewebe handeln, insbesondere um Haut.

Über ein derart definiertes Eingabefeld können Eingaben zur Bewegung eines Mauszeigers oder eines sonstigen Zeigegeräts getätigt werden, welche auf einem anderen Feld (Display, etc.) für Eingaben und Auswahloperationen verwendet werden.

Es ist möglich, dass Eingabefeld bedarfsweise neu zu positionieren, neu zu orientieren und/oder zu skalieren. Dies ist ohne großen Aufwand etwa auch während einer Operation möglich. Dies unterstreicht die Flexibilität des Ansatzes.

Neben einfachen Auswahloperation sind auch komplexe Bedieneingaben vorstellbar, welche komplexe Funktionen steuern. Dies kann beispielsweise die Steuerung und Manipulation von Anzeigemodi bzw. der Darstellung von Bildern im medizinischen Umfeld umfassen. Es ist vorstellbar, durch entsprechende Gesten (Wischen, Relativbewegungen zwischen Daumen und Zeigefinger, etc.) Funktionen wie Skalierung, Messungen, Überlagerungen, Orientierungsänderungen, usw. zu steuern.

Die Eingabefläche dient als Referenz für die Bedienbewegungen. Auf diese Weise wird nicht nur den Bediener die Bedienung erleichtert. Sofern eine Referenz für die Bedienungsgesten und ähnlichen Operationen vorgesehen ist, vereinfacht sich auch die Aufgabe der Erfassung und Verfolgung der Bewegungen für die Erfassungseinheit. Idealerweise verringert sich auf diese Weise die Anzahl der (Bewegungs-) Freiheitsgrade, die die Erfassungseinheit überwachen muss.

Die große Freiheit bei der Definition und Anordnung des Bedienfeldes ermöglicht einen hohen Grad der Individualisierung, insbesondere der Anpassung an Benutzervorlieben.

Es ist grundsätzlich auch vorstellbar, mehrere Bereiche als Bedienfelder zu definieren. Dies verringert oder vermeidet Mehrfachbelegungen, die bei klassischen Eingabefeldern oder Eingabeelementen häufig hinzunehmen sind. Analog hierzu ist es auch vorstellbar, mehrere Marker/Zeiger gleichzeitig zu verwenden.

Es ist vorstellbar, verschiedenartige Geräte gemäß ein und demselben Bedienkonzept zu steuern. Dies kann einerseits klassische Maus-Operationen bzw. Zeiger-Operationen auf einem Bildschirm ersetzen. Es ist jedoch auch vorstellbar, Geräteeinstellungen zu verändern, etwa über die Auswahl von Werten in einem Wertebereich. Ferner können über die Bedienerschnittstelle gemäß der vorliegenden Offenbarung Informationen und sonstige Daten ausgetauscht werden. Darüber hinaus ist es auch vorstellbar, Manipulatoren und sonstige Antriebe intuitiv und hochgenau zu steuern.

Ferner lässt sich der Aufwand für die Reinigung/Stabilisierung der Bedienfläche deutlich verringern, da eine ohnehin schon vorhandene Fläche für die Bedienereingabe genutzt wird.

Ein weiterer Vorteil geht dahin, dass die Bedienfläche in einfacher Weise (in Bezug auf die reale Oberfläche) veränderbar ist, etwa durch selektive Auswahl, Verschieben, Rotieren, Zoomen, Teilen, Zusammenfügen, und/oder Umschalten zwischen verschiedenen Bedienflächen.

Ein Bediener, der sich im Raum bewegt, kann die Bedienfläche in einfacher Weise "mitnehmen", etwa durch Verschieben oder durch eine neue Definition der Bedienfläche auf derselben oder einer anderen realen Oberfläche.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Merkmale und Vorteile der Erfindung ergeben sich aus der nachfolgenden Beschreibung und Erläuterung mehrerer bevorzugter Ausführungsbeispiele unter Bezugnahme auf die Zeichnungen. Es zeigen:
- Fig. 1: ein schematisches, vereinfachtes Flussdiagramm einer beispielhaften Ausführungsform eines Verfahrens zur Bedienung von Geräten in steriler Umgebung, insbesondere zur Steuerung medizinischer Vorrichtungen und Gerätschaften;
- Fig. 2: eine schematische Blockdarstellung einer beispielhaften Ausführungsform eines Systems zur Bedienung von Geräten in steriler Umgebung, insbesondere zur Steuerung medizinischer Vorrichtungen und Gerätschaften;
- Fig. 3: eine vereinfachte symbolhafte Darstellung einer beispielhaften Ausführungsform eines Systems zur Erfassung von Bediengesten;
- Fig. 4: eine vereinfachte symbolhafte Darstellung eines Eingabefeldes zur Veranschaulichung der Definition des Eingabefeldes;
- Fig. 5: eine vereinfachte symbolhafte Darstellung eines Eingabefeldes zur Veranschaulichung der Definition des Eingabefeldes;
- Fig. 6: eine vereinfachte symbolhafte Darstellung einer weiteren beispielhaften Ausführungsform eines Systems zur Erfassung von Bediengesten;
- Fig. 7: eine vereinfachte symbolhafte Darstellung einer weiteren beispielhaften Ausführungsform eines Systems zur Erfassung von Bediengesten;
- Fig. 8: eine vereinfachte symbolhafte Darstellung einer weiteren beispielhaften Ausführungsform eines Systems zur Erfassung von Bediengesten;
- Fig. 9: eine vereinfachte symbolhafte Darstellung einer weiteren beispielhaften Ausführungsform eines Systems zur Erfassung von Bediengesten;
- Fig. 10: eine vereinfachte symbolhafte Darstellung einer weiteren beispielhaften Ausführungsform eines Systems zur Erfassung von Bediengesten; und
- Fig. 11: eine vereinfachte symbolhafte Darstellung einer weiteren beispielhaften Ausführungsform eines Systems zur Erfassung von Bediengesten.

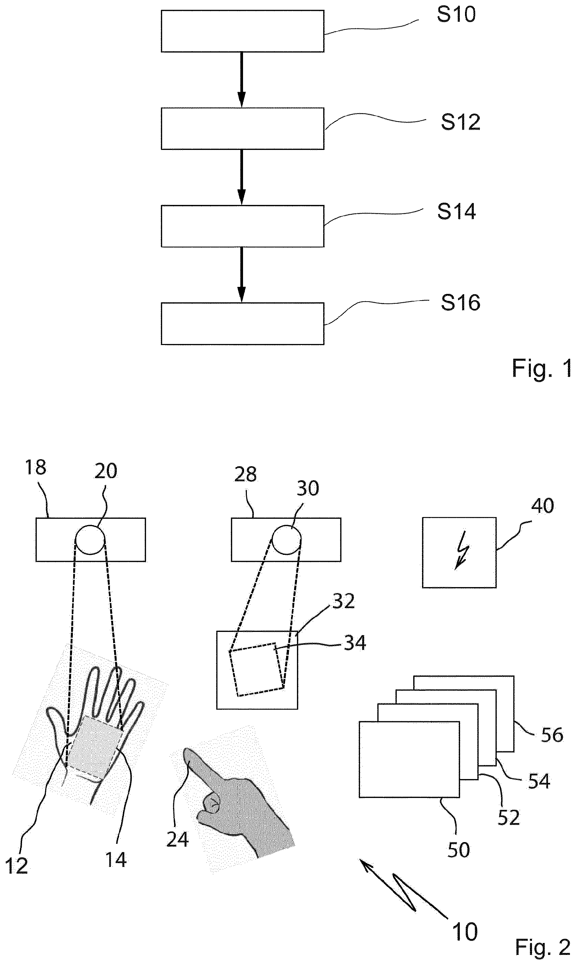

Fig. 1 veranschaulicht anhand eines schematisch stark vereinfachten Flussdiagramms eine beispielhafte Ausführungsform eines Verfahrens zur Steuerung von Geräten in steriler Umgebung. Das Verfahren eignet sich insbesondere zur Steuerung medizinischer Vorrichtungen und Gerätschaften.

Das Verfahren umfasst einen ersten Schritt S10, in dem ein virtuelles Eingabefeld auf einer realen Oberfläche definiert wird. Der Schritt S10 umfasst beispielsweise die Auswahl von 2 oder mehr Punkten, die die Eckpunkte oder sonstige Punkte zur Beschreibung des Eingabefeldes darstellen. Das Eingabefeld ist beispielsweise rechteckig oder quadratisch gestaltet. Dies ist jedoch nicht einschränkend zu verstehen. Das Eingabefeld kann auch hiervon abweichende Formen aufweisen.

Alternativ ist es vorstellbar, ein Eingabefeld vordefinierter Abmessungen durch Auswahl eines Punktes zu definieren. Dies kann in alternativen Ausführungsformen erweitert werden um die Auswahl einer Richtung zusätzlich zur Auswahl des Punktes. Auf diese Weise kann auch die Orientierung des Eingabefeldes definiert werden.

Die (reale) Oberfläche ist grundsätzlich in weiten Grenzen frei wählbar. Es kann sich hierbei beispielsweise um eine Handfläche oder eine vergleichbare Fläche auf der Haut des Bedieners oder einer weiteren Person handeln (Handrücken, Arm, Rücken, etc.). Ferner kann es sich auch um eine fest oder beweglich im Raum gegebene Oberfläche handeln, etwa um eine Fläche eines Gerätes, eine Wandfläche, eine Tischfläche, etc.

Ein nächster Schritt S12 betrifft die Erfassung einer Bedienereingabe an der Oberfläche im virtuellen Eingabefeld. Die Erfassung kann etwa optisch erfolgen, beispielsweise durch zumindest eine Kamera. Es sind Ausführungsform vorstellbar, bei denen 2 oder mehr Kameras miteinander kombiniert werden, um auch bei einer großen Gestaltungsfreiheit betreffend die Auswahl des Eingabefeldes auf der Oberfläche die Bedienereingabe genau und verlässlich erfassen zu können.

Die Bedienereingabe kann etwa einen Kontakt eines Fingers mit dem Eingabefeld umfassen. Ferner kann die Bedienereingabe auch eine Bewegung und/oder einen Kontakt eines Markers in Relation zum Eingabefeld umfassen. Der Marker (Zeiger) kann Bestandteil eines Stylus (Eingabestiftes) sein. Der Marker kann jedoch auch am Finger bzw. an der Hand des Bedieners angebracht sein. Es ist auch vorstellbar, einen optischen Marker zu verwenden, vergleichbar etwa einem Laserpointer oder einem ähnlichen optischen Strahler. Auf diese Weise kann auch ohne direkten Kontakt eine Eingabe im Bedienen Feld erfolgen. Es versteht sich, dass für die Erfassung entsprechend ertüchtigte Sensoren vorgesehen sind.

Je nach Art des Markers bzw. der gewählten Eingabemethode können verschiedenartig gestaltete Sensoren bei der Erfassungseinheit verwendet werden, die auf verschiedenen Wirkprinzipien beruhen. Neben optischen Sensoren (Kameras, Scanner, Laserscanner etc.) ist es auch vorstellbar, elektromagnetische Sensoren und Ähnliches vorzusehen.

Die Bedienereingabe kann eine Bediengeste umfassen. Eine solche Geste kann etwa im zweidimensionalen Raum erfolgen. Auf diese Weise können komplexe Bedienbefehle erzeugt und übermittelt werden. Ferner kann durch derartige Gesten die Wahl von Werten aus großen Wertebereichen vereinfacht werden. Darüber hinaus kann durch Gestensteuerung die Eindeutigkeit und Verlässlichkeit der Eingabe erhöht werden. Dies gilt auch dann, wenn eine beträchtliche Anzahl an Bedienbefehlen und entsprechenden Gesten vorgesehen ist.

Ein weiterer Schritt S14, der sich an den Erfassungsschritt S12 anschließen bzw. sich sogar zeitlich mit dem Erfassungsschritt S12 überlappen kann, betrifft die Darstellung einer visuellen Information in Reaktion auf die Eingabe. Auf diese Weise kann eine optische Rückmeldung (optisches Feedback) bereitgestellt werden.

Die visuelle Information kann genau in dem Eingabefeld bereitgestellt werden, in dem zuvor die Eingabe erfolgt ist. Auf diese Weise kann beispielsweise der Pfad der Bediengeste "nachgezeichnet" werden. Dies erhöht die Eindeutigkeit der Bedienung. Ferner kann die visuelle Rückmeldung jedoch auch andere Informationen als eine Nachahmung der Bediengeste enthalten, etwa alphanumerische Informationen, Symboldarstellungen, etc.

Die visuelle Information kann auch in einem Bereich bereitgestellt werden, der nicht dem Bereich entspricht, indem das Eingabefeld definiert ist. Dies ist beispielsweise dann vorstellbar, wenn der Bediener die Eingabe direkt an seiner Handfläche vornimmt. Sodann kann die Rückmeldung in einem anderen Bereich erfolgen. Dies ermöglicht "blinde" Eingaben, da der Bediener seine Aufmerksamkeit auf eine andere Fläche richten kann.

Es besteht sie, dass auch Mischformen vorstellbar sind, beispielsweise enthaltend einerseits ein "Nachzeichnen" der Geste und zusätzlich die Darstellung weiterer Informationen, in der Nähe oder in einem separaten Bereich.

Schließlich umfasst das Verfahren einen weiteren Schritt S16, der das Ausführen einer der Eingabe zugeordneten Funktion enthält. Mit dem Verfahren können vielfältige Funktionen gesteuert werden, etwa Anzeigefunktionen, Wiedergabefunktionen, Aufnahmefunktionen, Beleuchtungsfunktionen, Verstellfunktionen, Verfahrfunktionen, Antriebsfunktionen, Kommunikationsfunktionen, etc.

Es versteht sich, dass das anhand der Schritte S10 bis S16 veranschaulichte Verfahren weitere Schritte und Teilschritte enthalten kann, die gemäß den hierin beschriebenen Ausgestaltungen und Ausführungsbeispielen gestaltet sein können.

Ergänzend wird mit Bezug auf Fig. 2 anhand einer schematischen Blockdarstellung eine Ausführungsform eines Systems zur Steuerung von Geräten in steriler Umgebung veranschaulicht, welches zumindest in beispielhaften Ausführungsformen zur Durchführung des Verfahrens gemäß Fig. 1 gestaltet ist.

Das System ist insgesamt mit 10 bezeichnet. Das System 10 ist dazu ausgebildet, Bedieneingaben zu erfassen, die in Bezug auf eine weitgehend willkürlich wählbare Oberfläche 12 vorgenommen werden. Beispielsweise handelt es sich bei der Oberfläche 12 um eine Handfläche. Es sind jedoch auch diverse andere Flächen verwendbar, etwa Wandflächen, Tischflächen, Oberflächen von Geräten, etc.

Die beispielhafte Veranschaulichung einer Hand oder Handfläche als "Träger "der Oberfläche 12 zeigt, dass die Oberfläche 12 nicht unbedingt eben sein muss. Insofern ist es vorstellbar, gekrümmte Flächen, unebene Flächen, aber auch planare (ebene) Flächen zu nutzen.

In der Oberfläche 12 ist ein Eingabefeld 14 definiert. Die Definition des Eingabefeldes 14 kann etwa gemäß dem Verfahrensschritt S10 in dem anhand der Fig. 1 veranschaulichten Verfahren erfolgen.

Das System 10 umfasst ferner eine mit 18 bezeichnete Erfassungseinheit, die beispielhaft als optische Erfassungseinheit gestaltet ist. Die Erfassungseinheit 18 weist zumindest einen Sensor 20 auf, im Ausführungsbeispiel gemäß Fig. 2 handelt es sich bei dem Sensor auf 20 beispielhaft um einen optischen Sensor in Form einer Kamera. Es versteht sich, dass fallweise auch andere Sensoren nutzbar sind. Die Erfassungseinheit 18 kann eine Mehrzahl von Sensoren 20 umfassen. Dies kann dann dienlich sein, wenn die Oberfläche 12 bzw. das Eingabefeld 14 aus Sicht nur eines Sensors ungünstig im Raum platziert sind.

Ein Bediener kann mit einem Zeiger 24 Bedieneingaben im Eingabefeld 14 vornehmen. In einer beispielhaften Ausführungsform kann/können der oder die Zeiger 24 durch Finger einer Hand gebildet werden. Beispielsweise ist es vorstellbar, dass ein Nutzer seine linke Hand als Eingabefeld 14 und seine rechte Hand als Zeiger 24 verwendet, oder umgekehrt.

Die Bedienereingabe kann grundsätzlich ein einfaches Antippen, aber auch ein doppeltes Antippen umfassen. Ferner kann die Bedienereingabe Gesten umfassen, etwa das Zeichnen eines Bewegungspfades im zweidimensionalen Raum.

Im Rahmen dieser Offenbarung sind unter Gesten Bedieneingaben zu verstehen, die über ein einfaches (einmaliges) Antippen hinausgehen.

Der Zeiger 24 kann grundsätzlich auch einen sogenannten Marker umfassen. Marker können als optische Marker zur optischen Erfassung ausgestaltet sein. Marker können jedoch auch als elektromagnetische Marker oder anderweitig gestaltet sein, je nach genutztem Wirkprinzip auf Seiten der Erfassungseinheit.

Die Erfassungseinheit 18 kann die Bedienereingabe erfassen. Das System 10 ist ferner dazu ausgestaltet, in Reaktion auf die Bedienereingabe eine visuelle Information bereitzustellen. Dies kann beispielsweise unter Nutzung einer Anzeigeeinheit 28 erfolgen. Die Anzeigeeinheit 28 umfasst beispielsweise zumindest eine Projektionseinheit 30. Es sind auch andere Ausgestaltungen von Anzeigeeinheiten 28 vorstellbar, beispielsweise solche ohne Projektionseinheiten.

Die Anzeigeeinheit 28 ermöglicht eine visuelle Rückmeldung (optisches Feedback) an den Bediener, enthaltend Informationen betreffend oder in Reaktion auf seine Bedienereingabe im Eingabefeld 14.

Zu diesem Zweck ist die Anzeigeeinheit 28 beispielweise dazu ausgestaltet, auf einer Anzeigefläche 32 visuelle Information 34 darzustellen, etwa mittels Projektion. In dem beispielhaften Ausführungsbeispiel gemäß Fig. 2 ist die Anzeigefläche 32 von der Oberfläche 12 beabstandet, in der das Eingabefeld 14 definiert ist. In der Anzeigepflicht 32 können visuelle Information 34 angezeigt werden. Dies kann beispielsweise bei einer Eingabe durch eine Geste, ein "Nachzeichnen" der Geste umfassen. Es ist jedoch auch vorstellbar, in Reaktion auf die Geste eine andere Darstellung alphanumerischer Natur oder symbolhafter Natur zu nutzen.

Es ist jedoch auch vorstellbar, die Anzeigefläche 32 und die Oberfläche 12 zu vereinheitlichen. Auf diese Weise kann die anzuzeigende visuelle Information 34 tatsächlich in Einklang mit der Bedienungsgeste gebracht werden. Beispielhaft kann die visuelle Information 34 ein "Nachzeichnen" des Pfades entlang des EingabefeldeS14 umfassen, der der Geste entspricht. Beispielweise kann die visuelle Information 34 derart verzögert dargestellt werden, dass dem Bediener seine soeben vorgenommene Geste nochmals vor Augen geführt wird.

Alternativ oder zusätzlich ist es auch vorstellbar, dass die Anzeigeeinheit 28 das definierte Eingabefeld 14 visuell hervorhebt, etwa durch Darstellung einer Umrandung.

Ferner umfasst das System eine mit 40 bezeichnete Steuereinrichtung, die mit der Erfassungseinheit 18 und der Anzeigeeinheit 28 gekoppelt ist. Ferner ist die Steuereinrichtung 40 mit zumindest einem medizinischen Gerät 50, 52, 54, 56 gekoppelt, um das zumindest eine medizinische Gerät 50, 52, 54, 56 auf Basis der Bedienereingabe zu steuern. Es versteht sich, dass die Steuerung 40 auch mit anderen Geräten koppelbar ist, welche auf Basis der vom System 10 erfassten und verarbeiteten Bedienereingabe gesteuert werden können.

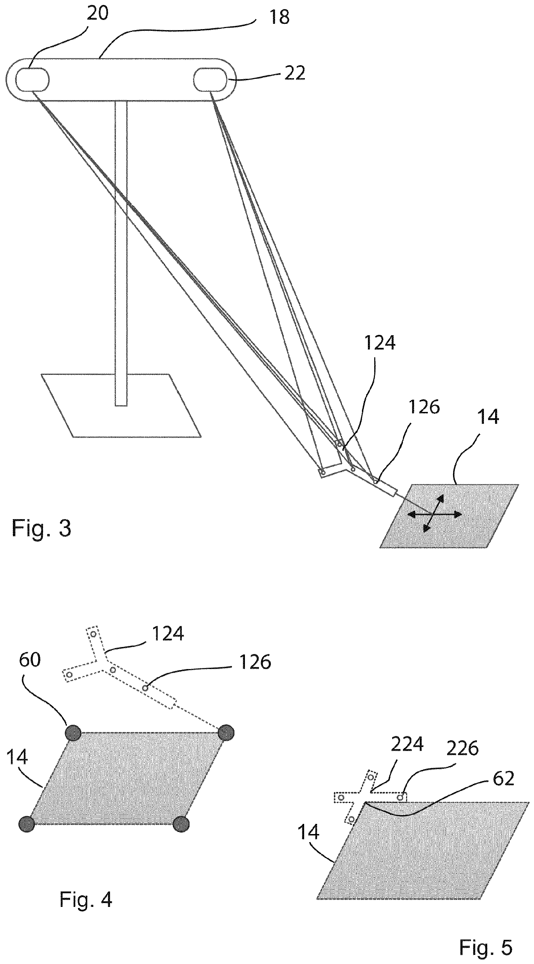

Mit Bezugnahme auf die Figuren 3 bis 11 werden verschiedene Ausführungsbeispiele von Systemen zur Steuerung/Bedienung von Geräten in steriler Umgebung veranschaulicht, die Prinzipien und Aspekte der vorliegenden Offenbarung nutzen. Insbesondere geht es darum, eine einfache, intuitive und flexible Bedienung diverser Gerätschaften insbesondere medizinischer Gerätschaften, zu ermöglichen, ohne dass dies zu einem erhöhten Desinfektionsaufwand, Reinigungsaufwand und/oder Aufwand für die Sterilisation führt.

Fig. 3 veranschaulicht eine Ausführungsform einer Erfassungseinheit 18, welche beispielsweise bei dem System 10 nutzbar ist, dass in Fig. 2 gezeigt ist. Die Erfassungseinheit 18 weist einen ersten Sensor 20 und einen zweiten Sensor 22 auf. Beide Sensoren sind beispielhaft als Kameras ausgebildet. Andere Arten von Sensoren sind vorstellbar. Die Kameras können zur Erfassung von Licht im sichtbaren Bereich, grundsätzlich aber auch zur Erfassung vom Licht im nicht-sichtbaren Bereich, etwa von Infrarotstrahlung, Ultraviolettstrahlung, etc. ausgebildet sein.

Sofern bei der Erfassungseinheit 18, zwei Sensoren 20, 22 vorgesehen sind, besteht die Möglichkeit zur Stereo-Erfassung und/oder 3D-Erfassung. Dies erhöht die Flexibilität, da grundsätzlich auch Eingaben in einem Eingabefeld 14 erfasst werden können, welches ungünstig in Bezug auf lediglich einen der beiden Sensoren 20, 22 platziert und orientiert ist.

Fig. 3 veranschaulicht ferner, dass ein Zeiger 124 für die Auswahl und Eingabe nutzbar ist, der etwa als Stylus oder in ähnlicher Weise gestaltet ist. Beispielhaft ist der Zeiger 124 mit zumindest einem Marker 126 versehen, welcher die Erfassung und das Tracking durch die Erfassungseinheit 18 vereinfacht. Auf diese Weise können sowohl einfach gehaltene als auch komplexe Bediengesten zuverlässig im Eingabefeld 14 erfasst werden.

Mit Bezugnahme auf Fig. 4 und auf Fig. 5 werden verschiedene Ansätze zur Definition des Eingabefeldes 14 auf der gewählten Oberfläche veranschaulicht. In Fig. 4 wird ein Zeiger 124 in Form eines Stylus verwendet, vergleiche auch die Darstellung in Fig. 3.

Mit dem Zeiger 124 werden zwei oder mehr Punkte, insbesondere Eckpunkte 60 ausgewählt, um das Eingabefeld 14 zu definieren. In Fig. 4 sind beispielsweise 4 Eckpunkte ausgewählt, um ein viereckiges/rechteckiges Eingabefeld 14 zu definieren.

Fig. 5 veranschaulicht, dass das Eingabefeld 14 auch ausgewählt werden kann, indem ein Referenzzeiger 224, der mit einem Referenzmarker versehen ist, auf der gewählten Oberfläche platziert wird. Der Referenzzeiger 224 weist Referenzmarker 226 auf. Der Referenzzeiger 224 enthält beispielsweise inhärente Richtungsinformationen und gegebenenfalls auch inhärente Größeninformationen, so dass unter Umständen die Anwahl lediglich eines Punktes 62 mit dem Referenzzeiger 224 genügt, um das Eingabefeld 14 hinreichend zu definieren.

Es ist vorstellbar, den Referenzzeiger 224 unabhängig von anderen Zeigern zu auszuführen, die für die eigentliche Eingabe im Eingabefeld 14 verwendet werden. Gemäß diesem Ansatz gibt es also zwei Arten von Zeigern. Es ist jedoch auch vorstellbar, ein und denselben Zeiger als Referenzzeiger 224 gemäß Fig. 5 für die Definition des Eingabefeldes 14 und anschließend als Zeiger für die Vornahme der Gesten oder sonstigen Eingaben zu wählen.

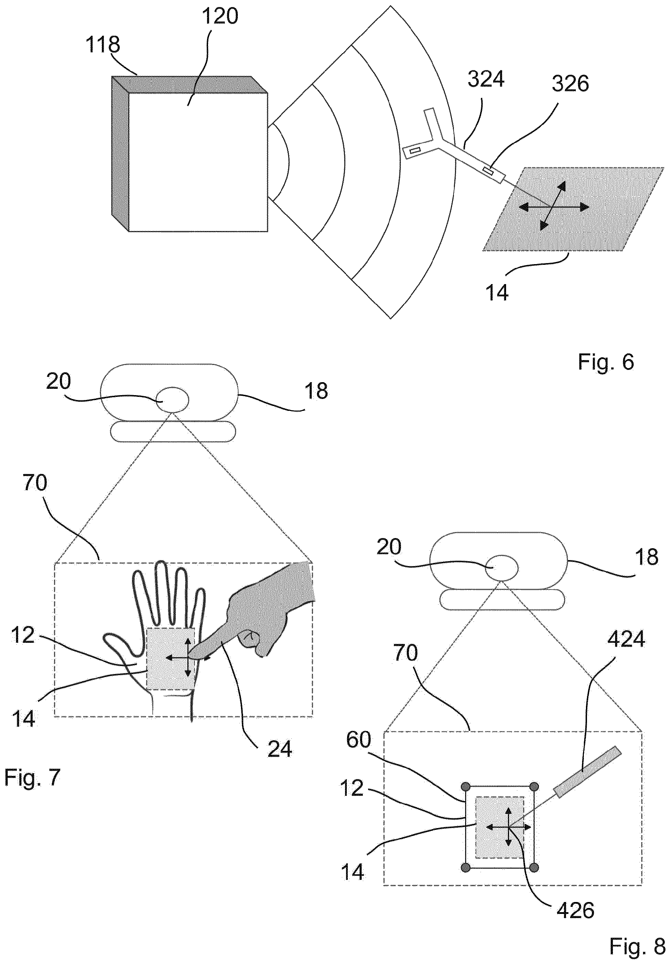

Fig. 6 veranschaulicht eine weitere beispielhafte Ausführungsform einer Erfassungseinheit 118, die bei dem System 10 gemäß Fig. 2 verwendbar ist. Die Erfassungseinheit 118 ist beispielhaft als elektromagnetische Erfassungseinheit ausgestaltet. Demgemäß ist die Erfassungseinheit 118 mit zumindest einem elektromagnetischen Sensor 120 versehen. Es versteht sich, dass auch eine Mehrzahl solcher Sensoren bei der Erfassungseinheit 118 vorgesehen sein kann.

Im definierten Eingabefeld 14 können Eingaben unter Verwendung eines Zeigers 324 vorgenommen werden, welcher beispielhaft als Stylus gestaltet ist. Der Zeiger 324 ist an die Art der Erfassungseinheit angepasst. Demgemäß ist der Zeiger 324 beispielsweise mit zumindest einem elektromagnetischen Marker 326 bzw. zumindest einem elektromagnetisch erfassbaren Marker 326 versehen.

Mit anderen Worten kann der zumindest eine Marker 326 etwa als RFID-Marker oder zumindest ähnlich dazu gestaltet sein. Ein solcher Marker 326 kann als aktiver Marker oder als passiver Marker gestaltet sein, je nach konkretem Anwendungsfall. Es ist jedoch auch bei Verwendung einer elektromagnetischen Erfassungseinheit 118 grundsätzlich vorstellbar, auf einen Stylus als Zeiger 324 zu verzichten. Mit anderen Worten kann der zumindest eine Marker 326 etwa an einem Finger oder Handschuh der Bedienperson angebracht sein.

Fig. 7 veranschaulicht eine Ausgestaltung einer Erfassungseinheit 18, die als Bilderfassungseinheit gestaltet und mit zumindest einem Bildsensor 20 in Form einer Kamera versehen ist. In Fig. 7 ist mit 70 ein Erfassungsbereich des Bildsensors 20 angedeutet.

In der in Fig. 7 veranschaulichten Ausführungsform ist als Oberfläche 12, in der das Eingabefeld 14 definiert ist, eine Handfläche des Bedieners ausgewählt. Als Zeiger 24 fungiert ein Finger (der anderen Hand) des Bedieners. Auf diese Weise kann gewissermaßen ohne physische Interaktion mit fremden Gegenständen eine Steuerung/Bedienung erfolgen.

Fig. 8 veranschaulicht ein weiteres denkbares Ausführungsbeispiel, bei dem eine Erfassungseinheit 18 verwendet wird, welche als optische Erfassungseinheit gestaltet ist. Demgemäß ist die Erfassungseinheit 18 mit zumindest einem optischen Sensor 20 versehen, analog zu den Ausführungsbeispielen gemäß Fig. 2, Fig. 3 und Fig. 7.

Im Ausführungsbeispiel gemäß Fig. 8 wird jedoch vorgeschlagen, für die Bedienung, also für das Ausführen von Bediengesten im Eingabefeld 14 auf der gewählten Oberfläche 12 einen Lichtzeiger 424 oder ein ähnlich gestaltetes optisches Zeigerelement zu verwenden. Mit anderen Worten kann der Lichtzeiger 424 etwa analog zu oder zumindest ähnlich einem Laserpointer gestaltet sein. Mit dem Lichtzeiger 424 kann aus einer Entfernung ein optischer Marker 426 im Eingabefeld 14 erzeugt werden, etwa in Form eines Lichtpunktes.

Ähnlich wie bei dem Ausführungsbeispiel gemäß Fig. 7 überwacht die optische Erfassungseinheit 18 einen Bereich 70, in dem das Eingabefeld 14 in der gewählten Oberfläche 12 definiert ist. Das Ausgangsbeispiel gemäß Fig. 8 erlaubt eine Bedienung durch Gesten ohne taktile Interaktion mit der Oberfläche 12.

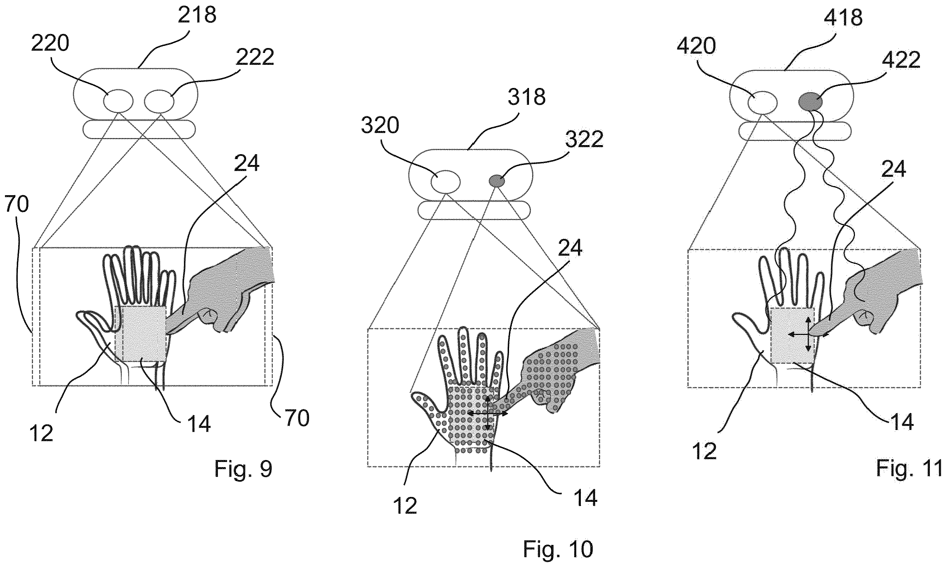

Mit Bezugnahme auf Fig. 9, Fig. 10 und Fig. 11 werden weitere beispielhafte Ausführungsformen von Erfassungseinheiten veranschaulicht. Die Erfassungseinheiten sind vorzugsweise zur Stereo-Erfassung bzw. zur räumlichen Erfassung (3D-Erfassung) ausgebildet. Dies hat den Vorteil, dass einerseits auch schon Annäherungen an das Eingabefeld 14 erfasst werden können. Auch wenn es im Rahmen der vorliegenden Offenbarung nicht um die freie Gestensteuerung im dreidimensionalen Raum geht, so können diese Informationen (in Bezug auf das gewählte Eingabefeld) genutzt werden, um die Erfassungsgenauigkeit zu erhöhen.

Darüber hinaus erhöht die Stereo-Erfassung bzw. die räumliche Erfassung die Genauigkeit auch dann, wenn das gewählte Eingabefeld 14 nicht ideal in Bezug auf einen (einzigen) Sensor ausgerichtet ist. Dies gilt beispielsweise auch dann, wenn das Eingabefeld 14 nicht ideal eben (planar) ist, sondern gekrümmt.

Als Oberfläche 12 für die Wahl des Eingabefeldes wird in Fig. 9, Fig. 10 und in Fig. 10 die Hand des Bedieners verwendet. Ferner wird als Zeiger 24 ein Finger der anderen Hand des Bedieners verwendet. Dies ist nicht einschränkend zu verstehen. Es sind auch Ausführungsform vorstellbar, bei denen einen Stylus als Zeiger verwendet wird. Daneben ist es natürlich auch vorstellbar, das Eingabefeld auf einer anderen Oberfläche zu definieren.

In Fig. 9 ist eine Erfassungseinheit 218 vorgesehen, welche auch als 3D-Erfassungseinheit zur Stereo-Erfassung bezeichnet werden kann. Die Erfassungseinheit 218 weist einen ersten Bildsensor 220 und einen zweiten Bildsensor 222 auf. Die beiden Bildsensoren 220, 222 sind etwas voneinander versetzt, so dass eine stereoskopische Erfassung und oder sogar eine 3D-Erfassung möglich ist. In Fig. 9 ist mit 70 und 72 Erfassungsbereich der beiden Sensoren 220, 222 angedeutet.

Ferner ist ebenso das beispielhaft auf einer Oberfläche 12 einer Hand gewählte Eingabefeld 14 doppelt und mit leichtem Versatz dargestellt, um die Stereo-Funktonalität zu veranschaulichen. Als Zeiger 24 dient wiederum der Finger einer Hand, welcher ebenso stereoskopisch erfassbar und verfolgbar ist. Das Eingabefeld 14 liegt im jeweiligen Erfassungsbereich 70, 72.

Der jeweilige Versatz kann ermittelt und verarbeitet werden, um räumliche Positionen und/oder Gesten zu erfassen. Dies ist beispielsweise auch dann von Vorteil, wenn gekrümmte nicht-ebene Eingabefelder 14 verwendet werden.

Fig. 10 veranschaulicht eine Erfassungseinheit 318, die der Erfassungseinheit 218 grundsätzlich ähnlich gestaltet ist. Die Erfassungseinheit 318 ist ebenso zur 3D-Erfassung bzw. zur räumlichen Erfassung ausgebildet, wobei spezielle optische Prinzipien zur Erfassung genutzt werden. Die Erfassungseinheit 318 nutzt beispielsweise strukturiertes Licht, etwa eine sogenannte Streifenprojektion, Punktmusterprojektion und/oder andere Projektionsmuster. Kombinationen sind denkbar. Das Prinzip beruht darauf, dass definierte Muster auf das Eingabefeld 14 projiziert werden, etwa mit einem definierten Versatz, und dass auf Basis der sich ergebenden Verzerrungen nicht nur 2D-Informationen, sondern auch räumliche Informationen erfasst werden können.

Demgemäß umfasst die Erfassungseinheit 318 neben zumindest einem Sensor 320, etwa einem optischen Sensor, ferner auch zumindest eine Projektionseinheit 322 zur Erzeugung des definierten Lichtmusters, etwa des Streifenmusters, Punktmusters und/oder anderen Projektionsmusters.

Schließlich zeigt auch das in Fig. 11 veranschaulicht Ausführungsbeispiel eine Erfassungseinheit 418, die zur Erfassung räumlicher Informationen ausgebildet ist. Beispielweise kombiniert die Erfassungseinheit 418 einen ersten Sensor 420 und einen zweiten Sensor 422. Der erste Sensor 420 ist beispielsweise als optischer Sensor in Form einer Kamera (Videokamera) gestaltet. Der zweite Sensor 422 ist beispielsweise als sogenannte ToF-Kamera (Time-of-Flight Kamera) gestaltet. Auch unter Verwendung des Time-of-Flight Prinzips lassen sich räumliche Informationen erfassen. Zu diesem Zweck verfügt die ToF-Kamera 422 eine entsprechend eingerichtete Lichtquelle, oder ist mit einer solchen gekoppelt. Die Lichtquelle sendet gepulstes oder in sonstiger Weise moduliert Licht aus, welches durch die ToF-Kamera 422 erfasst und verarbeitet werden kann. Alternativ ist ein Ausführungsbeispiel einer Variante der Erfassungseinheit 418 vorstellbar, bei dem nur ein ToF-Sensor 422 verwendet wird, insbesondere ein einziger ToF-Sensor 422.

ToF-Verfahren können auch als Laufzeit-Verfahren bezeichnet werden. Die ToF-Kamera 422 ist beispielsweise dazu ausgebildet, für ihre jeweiligen Bildpunkte die Zeit zu bestimmen, die das Licht zum beobachteten Objekt (Eingabefeld) und zurück zur Kamera braucht. Auf diese Weise lassen sich Tiefeninformationen ermitteln.

## Patentansprüche

1. Verfahren zur Steuerung von Geräten (50, 52, 54, 56) in steriler Umgebung, insbesondere mittels Gestensteuerung, mit den folgenden Schritten,
- Definition eines virtuellen Eingabefeldes (14) auf einer realen Oberfläche (12),
- Erfassung einer Bedienereingabe an der Oberfläche (12) im virtuellen Eingabefeld (14), wobei die Eingabe eine Bewegung eines Bedieners in Bezug auf die Oberfläche (12) umfasst, und wobei die Erfassung mittelbar erfolgt,
- Darstellung einer visuellen Information (34) in Reaktion auf die Eingabe, und
- Ausführen einer der Eingabe zugeordneten Funktion.

2. Verfahren nach Anspruch 1, wobei die Eingabe auf der Oberfläche (12) eine Eingabegeste umfasst, und wobei die visuelle Darstellung an die Eingabegeste angepasst ist und insbesondere einen Eingabepfad wiedergibt.

3. Verfahren nach Anspruch 1 oder 2, wobei die visuelle Darstellung eine definierte Verzögerung umfasst, insbesondere einen definierten zeitlichen Nachlauf.

4. Verfahren nach einem der Ansprüche 1 bis 3, wobei eine Handfläche einer Hand als Oberfläche (12) für das Eingabefeld (14) genutzt wird, und wobei die Bedienereingabe vorzugsweise mit einem Finger einer weiteren Hand erfolgt.

5. Verfahren nach einem der Ansprüche 1 bis 4, wobei die Oberfläche (12) eine Referenz für die Bedienereingabe bildet, und wobei die Bewegung entlang der Oberfläche erfolgt (12).

6. Verfahren nach einem der Ansprüche 1 bis 5, ferner aufweisend:
- Bereitstellung einer Erfassungseinheit (18, 118, 218, 318, 418) zur berührungslosen Erfassung der Eingabe, und
- Erfassung der Eingabe mit der Erfassungseinheit (18, 118, 218, 318, 418).

7. Verfahren nach einem der Ansprüche 1 bis 6, wobei zur Eingabe ein Marker (126, 226, 326, 426) verwendet wird, dessen Position ermittelbar ist, und wobei der Marker (126, 226, 326, 426) vorzugsweise handhaltbar und/oder handführbar und mit Positionsreferenzen versehen ist, deren Position durch eine Erfassungseinheit (18, 118, 218, 318, 418) ermittelbar ist.

8. Verfahren nach einem der Ansprüche 1 bis 7, wobei zur Eingabe ein optischer Zeiger, insbesondere ein Lichtzeiger oder Laserpointer, verwendet wird, wobei die Position eines Zielpunktes des optischen Zeigers im Eingabefeld (14) erfassbar ist.

9. Verfahren nach einem der Ansprüche 1 bis 8, ferner umfassend Definition, insbesondere temporäre Definition eines Eingabefeldes (14), vorzugsweise durch Auswahl zumindest zweier Punkte auf der Oberfläche (12), oder durch Auswahl eines Punktes und Festlegung einer Richtung.

10. Verfahren nach einem der Ansprüche 1 bis 9, wobei die Darstellung einer visuellen Information (34) in Reaktion auf die Eingabe mit einer Projektionseinheit erfolgt, insbesondere einem Laserprojektor.

11. Verfahren nach einem der Ansprüche 1 bis 10, wobei das virtuelle Eingabefeld (14) optisch wahrnehmbar hervorgehoben wird, insbesondere durch eine Projektionseinheit.

12. Verfahren nach einem der Ansprüche 1 bis 11, wobei zur Visualisierung des virtuellen Eingabefeldes (14) und/oder zur Darstellung einer visuellen Information (34) in Reaktion auf die Eingabe ein Head-up-Display oder Head-Mounted-Display verwendet wird.

13. System (10) zur Steuerung von Geräten (50, 52, 54, 56) in steriler Umgebung, insbesondere mittels Gestensteuerung, vorzugsweise gemäß dem Verfahren nach einem der Ansprüche 1 bis 12, wobei das System (10) Folgendes aufweist:
- eine Erfassungseinheit (18, 118, 218, 318, 418) zu berührungslosen Erfassung einer Bedienereingabe,
- eine Projektionseinheit (30) zur optisch wahrnehmbaren Hervorhebung eines virtuellen Eingabefeldes (14) und/oder zur Darstellung einer visuellen Information (34) in Reaktion auf die Bedienereingabe, und
- eine Steuereinrichtung (40), die dazu ausgebildet ist
- ein virtuelles Eingabefeld (14) auf einer realen Oberfläche (12) rechentechnisch zu definieren,
- die Bedienereingabe an der Oberfläche (12) im virtuellen Eingabefeld (14) zu erfassen, wobei die Eingabe eine Bewegung eines Bedieners in Bezug auf die Oberfläche (12) umfasst, und wobei die Erfassung mittelbar erfolgt,
- eine visuelle Information (34) in Reaktion auf die Eingabe dazustellen, und
- eine der Eingabe zugeordneten Funktion auszuführen.

14. System (10) nach Anspruch 13, ferner aufweisend:
- ein Eingabegerät (24, 124, 224, 324, 424), umfassend einen Marker und/oder einen Lichtzeiger,
wobei die Erfassungseinheit (18, 118, 218, 318, 418) zur Erfassung einer Position des Markers und/oder Lichtzeigers ausgestaltet ist.

15. Computerprogramm zur Steuerung von Geräten (50, 52, 54, 56) in steriler Umgebung, das Programmcode aufweist, der ein System (10) nach einem der Ansprüche 13 oder 14 dazu veranlasst, das Verfahren nach einem der Ansprüche 1 bis 12 ausführen, wenn das Computerprogramm durch die oder auf der Steuereinrichtung (40) ausgeführt wird.
